# EUROPÄISCHE PATENTSCHRIFT

(11) **EP 0 711 930 B1**
(45) Veröffentlichungstag und Bekanntmachung des Hinweises auf die Patenterteilung: **14.04.1999**
(21) Anmeldenummer: 95115002.8
(22) Anmeldetag: 23.09.1995
(51) Int. Cl.: F16D 13/50, F16D 13/70, F16D 13/58

(54) **Verfahren zum Verbinden eines Kupplungsmoduls mit einer Kurbelwelle**
Method for mounting a clutch unit on a crankshaft
Procédé de montage d'un module d'embrayage sur un vilebrequin

(30) Priorität: 11.11.1994 DE 4440348
(43) Veröffentlichungstag der Anmeldung: 15.05.1996
(73) Patentinhaber: Bayerische Motoren Werke Aktiengesellschaft, 80788 München (DE)
(72) Erfinder: Gouselis, Michael, D-86507 Kleinaitingen (DE)

(56) Entgegenhaltungen:
- DE-A- 4 308 613
- DE-A- 4 317 332
- GB-A- 2 263 509
- GB-A- 2 278 652

## Beschreibung

Die Erfindung betrifft ein Verfahren zum Verbinden eines Kupplungsmoduls mit einer Kurbelwelle nach dem Oberbegriff des Hauptanspruchs.

Bei einem Kupplungsmodul ist eine Schwungscheibe mit einer Kupplung eines Kraftfahrzeugs als eine Einheit fest verbunden. Das Kupplungsmodul besteht aus einer Schwungscheibe als Primärseite und einer Sekundärseite, die wiederum aus Kupplung, Druckplatte und Mitnehmerscheibe besteht. Die Schwungscheibe wird an der Kurbelwelle durch Schrauben befestigt. Alle Teile des Kupplungsmoduls vor den Schraubenköpfen haben entsprechende Bohrungen zum Durchtritt eines Verschraubungswerkzeugs.

Ein solches Kupplungsmodul zeigt DE 43 08 613 A1. Hier weist eine Tellerfeder unter anderem im wesentlichen kreisrunde Ausnehmungen auf, die dazu dienen, ein Verschraubungswerkzeug in das Kupplungsmodul einzuführen, um dieses mit einem Flansch einer Kurbelwelle verschrauben zu können. Die Ausnehmungen müssen, um sie möglichst klein zu halten, auf dem Lochkreisdurchmesser der Gewindebohrungen der Kurbelwelle liegen. Sie müssen einen etwas größeren Durchmesser aufweisen als der größte Durchmesser des einzuführenden Teiles des Verschraubungswerkzeugs.

Fällt nun das Verschraubungswerkzeug sehr groß aus, dann ist der Querschnitt der Tellerfederzungen zwischen den Ausnehmungen zu klein, so daß ein Bruch der Tellerfederzungen möglich ist. Werden nun, um diesen Nachteil zu vermeiden, die Ausnehmungen klein gehalten, so muß das Verschraubungswerkzeug einen kleinen Schaftdurchmesser haben. Derart dünne Werkzeuge haben aber den Nachteil, daß sie keine sehr großen Drehmomente übertragen können. Außerdem ist ihre Standzeit sehr gering. Dies führt besonders bei einer automatischen Montage zu Problemen, da beim Bruch von Werkzeugen die Anlage stillgelegt werden muß, um die Bruchteile zu entfernen bzw. die Werkzeuge zu wechseln.

Deshalb hat die Erfindung die Aufgabe, ein Verfahren zum Verbinden eines Kupplungsmoduls mit einer Kurbelwelle eines Verbrennungsmotors zu schaffen, bei dem das Verschraubungswerkzeug genügend stabil und die Tellerfeder ihrer Beanspruchung gemäß so gestaltet werden kann, daß ein Bruch der Tellerfederzungen beim Betrieb des Kupplungsmoduls vermieden wird.

Die Aufgabe wird erfindungsgemäß mit den kennzeichnenden Verfahrensschritten des Hauptanspruchs gelöst.

Nach der Erfindung erfolgt die Zufuhr des Verschraubungswerkzeugs nicht koaxial zur Schraubenachse. Das Verschraubungswerkzeug wird erfindungsgemäß von außen auf einem Lochkreisdurchmesser in das Kupplungsmodul eingeführt, der größer ist als der Lochkreisdurchmesser der Gewindebohrungen für die Schrauben an der Kurbelwelle. Somit wird das Verfahren in zwei Schritten vollzogen, wobei das Verschraubungswerkzeug im ersten Schritt in einem von der Drehachse des Kupplungsmoduls größeren radialen Abstand in das Kupplungsmodul eingeführt wird und dann radial nach innen verfährt, um im zweiten Schritt koaxial zur Schraube liegend mit dieser formschlüssig in Eingriff gebracht zu werden.

Durch den radialen Versatz zwischen den Durchmessern der Lochkreise zum Einführen des Verschraubungswerkzeugs und zum Festlegen der Schrauben, kann das Verschraubungswerkzeug über entsprechend ausgelegte Durchtrittsöffnungen vom radial außen zum radial innen liegenden Ende der Durchtrittsöffnungen zugeführt werden. Dadurch entsteht vorteilhafterweise eine Werkzeugbewegung, die eine beanspruchungsgemäße Gestaltung der Tellerfeder erlaubt.

Eine besonders vorteilhafte Verwendung des erfindungsgemäßen Verfahrens entsteht bei der Verschraubung von Kupplungsmodul und Kurbelwelle durch automatische Montageroboter. Hier müssen die Werkzeuge stabiler ausgeführt werden und die Toleranzen bei der Montagebewegung größer gehalten werden.

Wird bei dem Verfahren in einer weiteren vorteilhaften Ausführung der Erfindung eine beanspruchungsgemäß gestaltete Tellerfeder verwendet, so hat das den Vorteil, daß der größere Teil der Durchtrittsöffnung in der Tellerfeder für den Kopf des Verschraubungswerkzeugs ausgelegt werden kann und der kleinere Teil entsprechend für den Schaft, so daß sich durch das radiale Versetzen des Verschraubungswerkzeugs ein größerer Kopf des Verschraubungswerkzeugs verwenden läßt, da an dieser Stelle durch die Durchtrittsöffnung der Tellerfeder nur der Schaft mit seinem kleineren Durchmesser hindurchragen muß.

Ein Ausführungsbeispiel ist in der nachfolgenden Beschreibung und der zugehörigen Zeichnung näher dargestellt. Es zeigen:
- Bild 1: einen Schnitt durch ein Kupplungsmodul mit Kurbelwellenflansch,
- Bild 2: einen Teilausschnitt von Bild 1 im Bereich des Lochkreisdurchmessers der Befestigungsschrauben mit Verschraubungswerkzeug,
- Bild 3: eine Draufsicht auf eine Tellerfeder,
- Bild 4: ein als Adapter ausgebildetes Verschraubungswerkzeug.

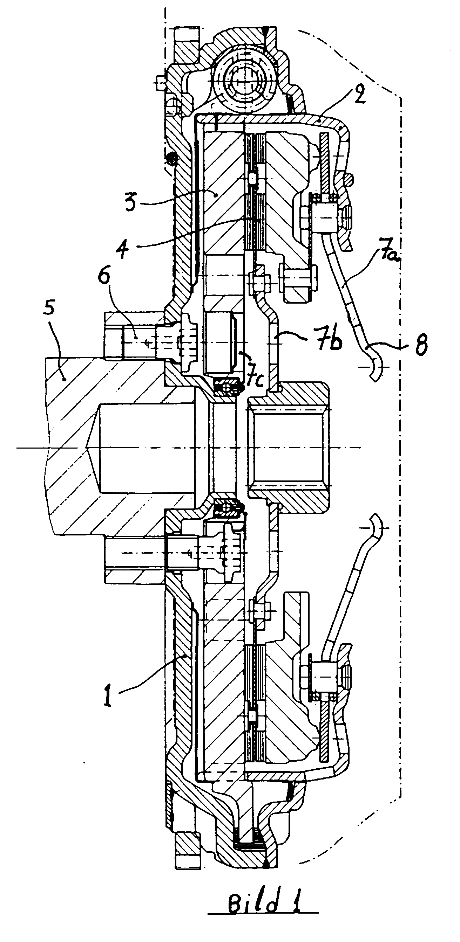

Bild 1 zeigt ein Kupplungsmodul mit einem Zweimassenschwungrad, das einen Teil des Kupplungsmoduls bildet. Die nicht zerlegbare Kupplung besteht aus einer Primärseite mit Schwungscheibe 1 und einer Sekundärseite mit einer Kupplung 2, einer Druckplatte 3 und einer Mitnehmerscheibe 4.

Die Schwungscheibe 1 wird an einer Kurbelwelle 5 mit Schrauben 6 verschraubt. Die Kupplung 2 wird mit Stiften der Druckplatte 3 verstiftet. Alle Teile vor den Köpfen der Schrauben 6 haben entsprechende Durchtrittsöffnungen 7a, 7b, 7c , so daß ein Verschraubungswerkzeug von einer Position außerhalb des Kupplungsmoduls über diese Durchtrittsöffnungen 7a, 7b, 7c in das Kupplungsmodul eingeführt und mit mindestens einer Schraube 6 formschlüssig in Eingriff gebracht werden kann.

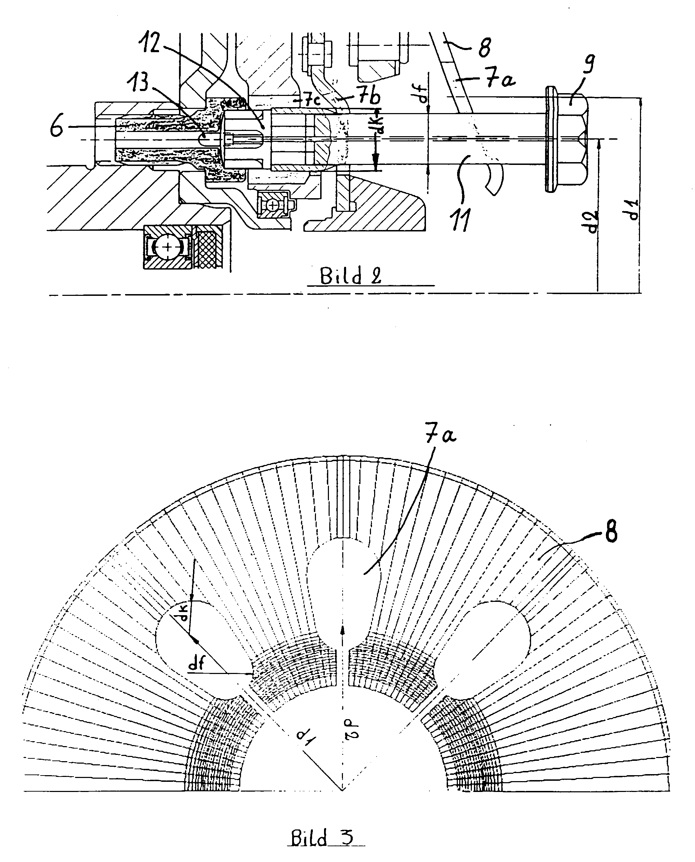

Das Verschraubungswerkzeug besteht aus einem nicht gezeichneten Antriebswerkzeug, gesteuert von einer ebenfalls nicht gezeichneten automatischen Montageanlage und einem mit dem Antriebswerkzeug verbindbaren Adapter 11 (Bild 2). Die Zufuhr des Adapters 11 in das Kupplungsmodul erfolgt nicht koaxial zur Achse der Schraube 6, sondern schräg durch einen anderen Lochkreis dl, der größer ist als ein Lochkreis d2 für die Schrauben 6. Der Adapter 11 hat als Antrieb für die Schraube 6 eine Verzahnung mit dem Kopfdurchmesser dk und dem Fußdurchmesser df. Der Schaft des Adapters hat ebenfalls den Durchmesser df.

Eine Tellerfeder 8 der Kupplung 2 hat auf dem Lochkreis mit dem Durchmesser dl Bohrungen mit dem Durchmesser dk, auf dem Lochkreis mit dem Durchmesser d2 Bohrungen mit dem Durchmesser df.

Wie in Bild 3 dargestellt ist, werden diese beiden Bohrungen dk, df tangential verbunden, so daß sie ein Langloch bilden, nämlich die Durchtrittsöffnung 7a.

Der Adapter 11 wird wie folgt zugeführt: Die Länge des Adapters mit dem Durchmesser dk wird am Lochkreis mit dem Durchmesser dl eingeführt. Wenn sich dieses Teil des Adapters 11 mit dem Durchmesser dk hinter der Tellerfeder 8 befindet, wird der Adapter 11 nach innen bis zum Lochkreisdurchmesser d2 mit dem Bohrungsdurchmesser df geschoben. Jetzt kann der Adapter 11 axial bis zur Schraube 6 bewegt werden. Der Querschnitt der Tellerfeder 8 am Lochkreisdurchmesser d2 ist groß genug und der Adapter 11 hat einen größeren Fußkreisdurchmesser df, so daß er weniger bruchgefährdet ist.

Die Zufuhr des Adapters 11 kann entweder von einem Werker vorgenommen werden oder sogar automatisiert werden.

Es ist aber auch möglich, daß der Adapter 11 bereits von dem Zulieferer des Kupplungsmoduls eingesetzt wird. Die Anzahl der Adapter 11 pro Kupplungsmodul ist gleich der Anzahl der Schrauben 6 pro Kupplungsmodul. Nach dem Verschrauben werden die Adapter 11 entfernt, um wieder für die Verschraubung des nächsten Kupplungsmoduls benutzt zu werden. Wenn die Adapter 11 vom Zulieferer zugeführt werden, müssen sie zu ihm zurückgeschickt werden und dann von ihm wieder zugeführt werden.

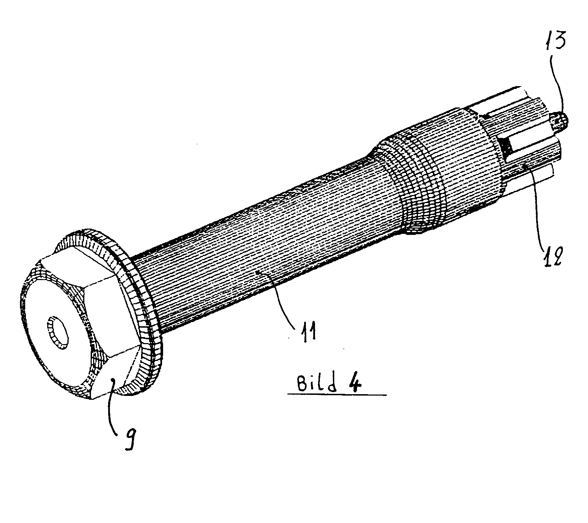

Der Adapter 11, der von der nicht gezeichneten automatischen Montagestation zugeführt wird, besteht aus den Teilen 9, 12 und 13 (Bild 2 und Bild 4). Teil 9 hat die Form eines Schraubenkopfes, es sind aber auch andere Verzahnungsprofile als Antrieb möglich. Auf der anderen Seite befindet sich am Adapter 11 eine entsprechende Aufnahmemöglichkeit für ein Werkzeug 12, das für den Antrieb der Schraube 6 benötigt wird. Adapter 11 und Werkzeug 12 werden durch einen Stift 13 zusammengehalten. Durch diesen Stift 13 wird auch der Adapter 11 in der Schraube 6 zentriert. Außerdem ist es mit Hilfe dieses Stiftes 13 möglich, im Falle eines Bruchs des Werkzeugs 12 beim Verschrauben oder Lösen der Schraube 6, das Bruchteil durch ziehen des Adapters 11 zu entfernen. Das Werkzeug 12 kann dann ersetzt und mit dem Adapter 11 erneut verstiftet werden.

## Patentansprüche

1. Verfahren zum Verbinden eines Kupplungsmoduls mit einer Kurbelwelle (5) eines Verbrennungsmotors, in dem eine Schwungscheibe (1) des Kupplungsmoduls über darin unverlierbar gehaltene Schrauben (6) an einem Befestigungsflansch der Kurbelwelle (5) angebracht wird, auf die Weise, daß mindestens ein Verschraubungswerkzeug von einer Position außerhalb des Kupplungsmoduls in einem ersten Schritt durch mindestens eine Durchtrittsöffnung (7a) einer Tellerfeder (8) in das Kupplungsmodul eingeführt wird und in einem zweiten Schritt mit mindestens einer Schraube (6) formschlüssig in Eingriff gebracht und durch seine dann einsetzende Rotationsbewegung die Schraube (6) in eine entsprechende Gewindebohrung des Befestigungsflanschs zur Herstellung einer kraftschlüssigen Verbindung eingedreht wird, dadurch gekennzeichnet, daß das Verschraubungswerkzeug vom ersten Schritt zum zweiten Schritt radial in Richtung der Drehachse des Kupplungsmoduls bewegt wird.

2. Verfahren nach Anspruch 1, dadurch gekennzeichnet, daß es automatisch durch eine Montagestation ausgeführt wird.

3. Tellerfeder (8) für ein Kupplungsmodul, zur Verwendung für ein Verfahren nach Anspruch 1 oder 2, dadurch gekennzeichnet, daß die Durchtrittsöffnungen (7a) für das Verschraubungswerkzeug Symmetrieachsen aufweisen, die sich von der Drehachse radial nach außen erstrecken, daß sich die Durchtrittsöffnungen (7a) in radialer Richtung von außen nach innen verjüngen und daß diese außen so groß gestaltet sind, daß das Verschraubungswerkzeug in das Kupplungsmodul eingeführt werden kann.

## Claims

1. A process for joining a clutch module to a crankshaft (5) of an internal combustion engine, in which a flywheel (1) of the clutch module is attached, using captive screws (6) within it, to a fastening flange of the crankshaft (5), in such a fashion that at least one screwdriver is introduced in a first step through at least one through hole (7a) in a disc spring (8) into the clutch module, from a position outside the clutch module and in a second step, is brought into positive engagement with at least one screw (6) and by its then applied rotational movement the screw (6) is screwed into a suitable threaded boring in the fastening flange to produce a frictional connection, characterised in that the screwdriver is moved radially in the direction of the turning axis of the clutch module .from the first step to the second step.

2. A process according to Claim 1, characterised in that it is carried out automatically by an assembly station.

3. A disc spring (8) for a clutch module, for use in a process according to Claim 1 or Claim 2, characterised in that the through openings (7a) for the screwdriver have axes of symmetry, which extend outward from the turning axis, that the through holes (7a) become smaller in a radial direction from the outside to the inside and that these are formed large enough at their outer ends so that the screwdriver can be introduced into the clutch module.

## Revendications

1. Procédé de montage d'un module d'embrayage sur un vilebrequin (5) d'un moteur à combustion interne selon lequel un volant d'inertie (1) du module d'embrayage est monté sur la bride de fixation du vilebrequin (5) par des vis (6) retenues de manière imperdable, selon lequel on introduit un outil de vissage d'une position à l'extérieur du module d'embrayage, au cours d'une première étape à travers au moins un passage (7a) du diaphragme (8) dans le module d'embrayage et dans une seconde étape, on met l'outil en prise de forme avec une vis (6) et par la rotation de l'outil on fixe la vis (6) dans un taraudage correspondant de la bride de fixation pour réaliser la liaison par la force,
caractérisé en ce que
l'outil de vissage est déplacé dans la direction radiale de l'axe de rotation du module d'embrayage entre la première étape et la seconde étape.

2. Procédé selon la revendication 1,
caractérisé en ce qu'
il est effectué de manière automatique par un poste de montage.

3. Diaphragme (8) de module d'embrayage pour la mise en oeuvre du procédé selon l'une des revendications 1 ou 2,
caractérisé en ce que
les passages (7a) pour l'outil de vissage ont des axes de symétrie qui s'étendent radialement vers l'extérieur par rapport à l'axe de rotation, les passages (7a) vont en diminuant de l'extérieur vers l'intérieur dans la direction radiale et à l'extérieur ces passages sont suffisamment grands pour permettre l'introduction de l'outil de vissage dans le module d'embrayage.
